**Europäisches Patentamt**

**European Patent Office**

**Office européen des brevets**

(19)

(11) **EP 1 160 573 A2**

(12) **EUROPÄISCHE PATENTANMELDUNG**

(43) Veröffentlichungstag:
05.12.2001 Patentblatt 2001/49

(51) Int Cl.⁷: **G01N 35/02**

(21) Anmeldenummer: 01113301.4

(22) Anmeldetag: 31.05.2001

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **31.05.2000 DE 10027087**

(71) Anmelder: **Infineon Technologies AG**
**81669 München (DE)**

(72) Erfinder: **Lehmann, Volker, Dr.**
**80689 München (DE)**

(74) Vertreter: **Viering, Jentschura & Partner**
**Postfach 22 14 43**
**80504 München (DE)**

(54) **Mikrotiterplatte und gekoppeltes Vielfachpipettiergerät**

(57) Die Anordnung weist eine Mikrotiterplatte (101) mit einer Vielzahl von Vertiefungen (102) und einer Vielzahl von Pipetten auf sowie eine Pumpe (104), die mit mehreren Pipetten (202) derart gekoppelt ist, dass jeweils ein Analyt mittels der Pumpe über eine zugehörige Pipette angesaugt werden kann und, dass durch Betätigen der Pumpe Analyte gleichzeitig aus mehreren Vertiefungen angesaugt oder in mehrere Vertiefungen eingebracht werden können.

FIG 2

**Beschreibung**

Die Erfindung betrifft eine Anordnung zur Aufnahme flüssiger Analyten.

Eine solche Anordnung ist aus [1] bekannt.

Die aus [1] bekannte Anordnung weist eine Mikrotiterplatte auf mit einer Vielzahl von Vertiefungen zur Aufnahme eines Analyten.

Eine solche Mikrotiterplatte wird eingesetzt beispielsweise in unterschiedlichsten Anwendungen der Medizin und Biotechnologie zur Aufnahme von zu analysierenden Flüssigkeiten, beispielsweise im Bereich der DNA-Analyse.

Üblicherweise wird in jeder Vertiefung ein unterschiedliches zu analysierendes Analyt eingebracht und über eine Pipette, üblicherweise über eine Vielzahl nebeneinander als sogenannter Pipettierkamm ausgebildetes Element, wobei beispielsweise bei einem Pipettierkamm jeweils eine Pipette für jeweils eine Vertiefung einer Zeile der Mikrotiterplatte mit matrixförmig angeordneten Vertiefungen vorgesehen ist.

Mittels einer Pipette wird jeweils aufgrund eines in der Pipette aufgebauten Unterdrucks ein Analyt aus der entsprechenden Vertiefung, in die das Analyt eingefüllt ist und in die die Pipette eingetaucht ist, entnommen, d.h. aufgesaugt.

Die Pipette ist gemäß der aus [1] bekannten Anordnung jeweils über einen Schlauch mit einer der jeweiligen Pipette eindeutig zugeordneten Pumpe, mit der der Unterdruck erzeugt wird, derart gekuppelt, dass das Analyt mittels der Pumpe über die entsprechende Pipette angesaugt werden kann und entsprechend auch wieder, gesteuert von der Pumpe, in die Vertiefung eingebracht werden kann.

Eine solche bekannte Mikrotiterplatte weist beispielsweise 96 Vertiefungen bei einer Größe von 8 cm x 12 cm auf.

Eine solche bekannte Mikrotiterplatte kann aber grundsätzlich beliebig viele, üblicherweise bis zu 384 Vertiefungen aufweisen.

Ein Nachteil der aus [1] bekannten Anordnung ist insbesondere darin zu sehen, dass aufgrund der hohen Anzahl von Pumpen es unpraktikabel bis teilweise nicht mehr möglich ist, auf einer derart kleinen Fläche von 8 cm x 12 cm für jede Vertiefung einer Zeile, d.h. für eine so hohe Anzahl von Pipetten jeweils eine eigene Pumpe vorzusehen.

Somit ist das Herstellen eines solchen Pipettenkamms und damit einer solchen Anordnung zur Aufnahme flüssiger Analyten sehr aufwendig und teuer.

Weiterhin ist anzumerken, dass bei der aus [1] bekannten Anordnung üblicherweise jeweils eine peristaltische Pumpe zum Ansaugen und Einbringen des Analyten aus bzw. in die jeweilige Vertiefung verwendet wird.

Ein erheblicher Nachteil dieser bekannten Anordnung ist weiterhin darin zu sehen, dass für die Analyse üblicherweise eine Mindestmenge von einem zu analysierenden Analyt in der Größenordnung von 1 ml erforderlich ist.

Ein weiterer Nachteil ist darin zu sehen, dass die große Anzahl erforderlicher Pumpen mit zugehöriger Anordnung von Schläuchen sehr kompliziert und damit störanfällig ist.

Weiterhin ist in [2] ein sogenannter Flow-Thru-Chip™ beschrieben, mittels dem eine Analyse des Analyten hinsichtlich der Existenz biologischen Materials in dem Analyt bekannt.

Der Flow-Thru-Chip™, eine Ausgestaltung eines Analysechips, weist eine Vielzahl von Kanälen auf, durch die das Analyt durch den Analysechip geführt wird, wobei die Oberfläche der Kanäle jeweils mit Fängermolekülen, allgemein mit Molekülen, die das entsprechend gesuchte biologische Material, dessen Existenz in dem Analyt nachgewiesen werden soll, vorzugsweise kovalent binden können.

Ist als biologisches Material in dem Analyten ein DNA-Strang mit vorgegebener DNA-Sequenz zu ermitteln, so sind an der Oberfläche eines solchen Flüssigkeitskanals in dem Flow-Thru-Chip™ DNA-Fängermoleküle mit einer zu der zu ermittelnden DNA-Sequenz komplementären Sequenz aufgebracht.

Ist in dem Analyten das DNA Material mit der gesuchten DNA-Sequenz vorhanden, so binden die DNA-Stränge mit den entsprechenden DNA-Fängermolekülen mit entgegengesetzter, d.h. komplementärer Sequenz.

Allgemein wird ein solcher Analysechip häufig zur Analyse, d.h. zum Nachweis makromolekularer Biopolymere, worunter beispielsweise Proteine oder Peptide oder auch DNA-Stränge einer jeweils vorgegebener Frequenz zu verstehen sind, eingesetzt.

Ferner ist es aus [3] bekannt, eine Membran aus Glas oder Silizium herzustellen, die eine Vielzahl von Poren mit einem konstanten Durchmesser von 0,1 µm bis 10 µm, beispielsweise auch 0,1 µm bis 1 um aufweist.

Somit liegt der Erfindung das Problem zugrunde, eine Anordnung zur Aufnahme flüssiger Analyten anzugeben, bei der auch eine erhöhte Anzahl von Vertiefungen in einer solchen Anordnung kostengünstiger hergestellt und betrieben werden kann, als dies mit einer Anordnung gemäß dem Stand der Technik möglich ist.

Das Problem wird durch die Anordnung zur Aufnahme flüssiger Analyten mit dem Merkmal gemäß dem unabhängigen Patentanspruch gelöst.

Eine Anordnung zur Aufnahme flüssiger Analyten weist eine Mikrotiterplatte mit einer Vielzahl von Vertiefungen zur Aufnahme eines Analyten auf.

Unter einer Mikrotiterplatte ist im Rahmen der Erfindung eine Platte mit einer Vielzahl von Vertiefungen zur Aufnahme eines Analyten zu verstehen, die üblicherweise Vertiefungen aufweisen, die in einer Matrixform, d.h. in Zeilen und Spalten mit üblicherweise konstanten Abständen von zueinander angeordnet sind. Es ist jedoch in diesem Zusammenhang anzumerken, dass eine Mikrotiterplatte nicht auf eine solche Anordnung beschränkt ist, sondern dass im Rahmen der Erfindung eine Mikrotiterplatte derart zu verstehen ist, dass sie eine Struktur mit einer Vielzahl beliebig angeordneter Vertiefungen zur Aufnahme eines flüssigen Analyten beschreibt.

Für eine Vertiefung ist eine Pipette, bei einer Vielzahl von Vertiefungen üblicherweise einer Vielzahl von Pipetten vorgesehen, wobei jeweils mit einer Pipette ein Analyt aus einer zugehörigen Vertiefung, d.h. einer Vertiefung, über der die Pipette aktuell angeordnet ist, entnommen werden kann oder in diese Vertiefung eingebracht werden kann.

Ferner weist die Anordnung eine Pumpe auf, die mit mehreren Pipetten derart gekuppelt ist, dass jeweils ein Analyt mittels der Pumpe über eine zugehörige Pipette angesaugt werden kann und das durch Betätigen der Pumpe Analyte gleichzeitig aus mehreren Vertiefungen angesaugt oder in mehrere Vertiefungen eingebracht werden können.

Auf diese Weise ist es möglich, mit einer sehr einfachen Anordnung, insbesondere einer verglichen mit der Anzahl von Vertiefungen erheblich verringerten Anzahl von Pumpen die Analyte anzusaugen, für den Fall, dass in dem Ansaugweg, d.h. in dem Flüssigkeitskanal innerhalb der Pipette ein Analysechip, beispielsweise der aus [2] beschriebene Flow-Thru-Chip™ mit auf den Oberflächen der Flüssigkeitskanäle aufgebrachten Fängermolekülen vorgesehen ist, zu gleicher Zeit jeweils mehrere, üblicherweise unterschiedliche Analyten zu analysieren.

Auf diese Weise wird die gesamte Anordnung erheblich kostengünstiger herstellbar und betreibbar.

Ferner ist die Anordnung erheblich weniger komplex und somit auch in erheblich geringeren Maßen störungsanfällig.

Ferner sind Analysechips zur Analyse des Analyt vorgesehen, wobei jeweils ein Analysechip einer Vertiefung zugeordnet ist zur Analyse eines in der jeweiligen Vertiefung eingebrachten Analyt. Die mit dem Analyt in Kontakt kommende Fläche zumindest eines Teils der Analysechips ist derart eingerichtet, dass biologisches Material zum Binden von in dem Analyten enthaltenen Molekülen auf der Fläche immobilisiert werden kann.

Somit ist es erstmals auf einfache Weise möglich, biologisches Material auf robuste und dennoch kostengünstige und schnelle Weise parallelisiert zu analysieren.

Die Pipetten können als Pipettierkamm ausgestaltet sein.

Gemäß einer weiteren Ausgestaltung der Erfindung ist es vorgesehen, dass der Pipettierkamm ein erstes Element und ein mit dem ersten Element gekuppeltes zweites Element aufweist, wobei das zweite Element die Pipetten aufweist.

Zwischen dem ersten Element und dem zweiten Element kann eine Platte angeordnet sein, in der gemäß einer Ausgestaltung der Erfindung die Analysechips zur Analyse der Analyten angeordnet sind. Für jeweils einen Analyse-Chip ist üblicherweise eine Vertiefung zur Aufnahme jeweils zur Analyse eines in der jeweiligen Vertiefung eingebrachten Analyten vorgesehen.

Die mit dem Analyten in Kontakt kommende Fläche zumindest eines Teils der Analysechips kann biologisches Material aufweisen, wodurch es möglich wird, in dem Analyten enthaltene biologische Moleküle, beispielsweise makromolekulare Biopolymere zu binden.

Unter makromolekularen Biopolymeren sind im Rahmen dieser Erfindung beispielsweise Proteine oder Peptide oder auch DNA-Moleküle zu verstehen.

Gemäß einer Ausgestaltung der Erfindung weist die Mikrotiterplatte 96 Vertiefungen oder 384 Vertiefungen zur Aufnahme jeweils eines Analyten auf.

Über mindestens einen Teil der Pipetten kann jeweils eine elastische Membran dichtend angeordnet sein, so dass durch Verformung der Membran der Analyt aus der entsprechenden Vertiefung angesaugt oder in die entsprechende Vertiefung eingebracht werden kann.

Anschaulich bedeutete diese Ausgestaltung, dass mittels einer Verformung der Membran in der Pipette, d.h. zwischen der Membran und dem Analyten in der Pipette ein Unterdruck bzw. ein Überdruck erzeugt wird, wodurch eine Bewegung des Analyten innerhalb der Pipette, vorzugsweise durch den Analysechip hindurch, möglich ist.

Ein Vorteil bei Einsatz einer solchen Membran ist darin zu sehen, dass geschlossene Kammern gebildet werden, wodurch keine Dämpfe von den Analyten gebildet werden können, die möglicherweise für den Menschen giftig sein könnten.

Für jede Pipette ist gemäß einer Ausgestaltung der Erfindung eine Prellplatte vorgesehen zum Mischen des durch die Pipette gefüllten Analyts, wodurch das Analyseergebnis weiter verbessert wird, da aufgrund der Prellplatte in dem Strömungsweg des Analyten die Mischung des Analyten und damit das Inkontaktbringen des Analyts mit den Fängermolekülen auf der Oberfläche der Flüssigkeitskanäle des Analysechip weiter verbessert wird.

Weiterhin ist es gemäß einer Ausgestaltung der Erfindung vorgesehen für den Fall, dass eine Temperaturkontrolle in der Anordnung beispielsweise für chemische Reaktionen oder biologische Reaktionen erforderlich ist, dass in der Anordnung Messelemente und Heizelemente vorgesehen sind.

Diese Elemente können gemäß einer Ausgestaltung der Erfindung in dem Analysechip integriert sein.

Gemäß einer weiteren Ausgestaltung der Erfindung ist es vorgesehen, dass die Pumpe derart betreibbar ist, dass der Analyt mittels in der Pipette erzeugtem Unterdruck angesaugt wird, der geringer ist als eine in der Pipette möglicherweise gebildete Oberflächenspannung des Analyten.

Auf diese Weise wird die Erkenntnis ausgenutzt, dass sich aufgrund des Kapillareffekts insbesondere bei derart geringen Dimensionen bei einer Pipette für eine Mikrotiterplatte ein sehr starker Kapillareffekt bildet, der zu einer sehr erheblichen Oberflächenspannung des aufzunehmenden Analyten führt, wenn der gesamte Analyt aus der Vertiefung angesaugt worden ist.

Auf diese Weise wird sehr einfach ohne eine zusätzlich erforderliche komplexe Steuerung vermieden, dass Luft oder ein anderes Gas in die Pipette angesaugt wird, nachdem das gesamte Analyt aus der jeweiligen Vertiefung aufgenommen worden ist.

Es wird somit gewährleistet, dass immer genau soviel Analyt, allgemein Flüssigkeit und/oder Gas aufgenommen wird, wie zur Analyse erforderlich.

Anschaulich kann die Erfindung darin gesehen werden, dass durch Vorsehen einer Pumpe für mehrere Pipetten und deren Ausgestaltung derart, dass jeweils gleichzeitig aus mehreren Vertiefungen mittels einer Pumpe unterschiedliche Analyte angesaugt und entsprechend analysiert werden können, die Komplexität und die Kosten für eine Anordnung zur Aufnahme flüssiger Analyten erheblich verbessert wird.

Ausführungsbeispiele der Erfindung sind in den Figuren dargestellt und werden im weiteren näher erläutert.

Es zeigen

Figur 1      eine Skizze einer Anordnung zur Aufnahme flüssiger Analyten gemäß einem ersten Ausführungsbeispiel der Erfindung;

Figur 2      einen Ausschnitt der Anordnung aus Figur 1 im Querschnitt in einem Zustand, in dem sich das gesamte Analyt in den Vertiefungen befindet;

Figur 3      den Ausschnitt aus Figur 2 in dem Zustand, dass ein Teil der Analyten durch die Pipetten in einen Aufnahmeraum angesaugt worden ist;

Figur 4      einen Querschnitt durch eine Pipette, anhand der ein Prinzip, dem das zweite Ausführungsbeispiel der Erfindung zugrunde liegt, veranschaulicht ist;

Figur 5      einen Querschnitt durch eine Pipette, anhand der ein Prinzip, dem das zweite Ausführungsbeispiel der Erfindung zugrunde liegt, veranschaulicht ist;

Figur 6      einen Querschnitt durch eine Pipette, anhand der ein Prinzip, dem das zweite Ausführungsbeispiel der Erfindung zugrunde liegt, veranschaulicht ist.

**Erstes Ausführungsbeispiel:**

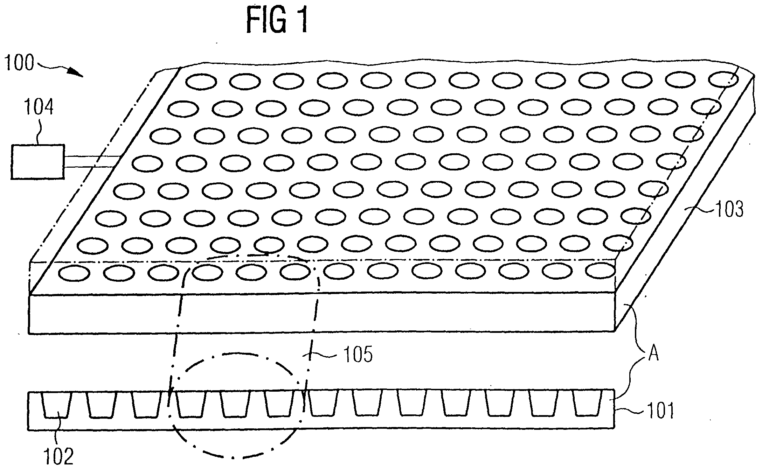

**Fig.1** zeigt eine Anordnung 100 zur Aufnahme flüssiger Analyten gemäß einem ersten Ausführungsbeispiel der Erfindung.

Die Anordnung 100 weist eine Mikrotiterplatte 101 mit einer Vielzahl von Vertiefungen 102 zur Aufnahme von üblicherweise jeweils unterschiedlichen Analyten, d.h. zu analysierenden Flüssigkeiten, auf.

Auf der Mikrotiterplatte 101 ist eine weitere Platte 103 aufgebracht, die mit der Mikrotiterplatte 101 mittels Schrauben (nicht dargestellt) gekuppelt ist. Die weitere Platte 103 wird im weiteren noch detailliert erläutert.

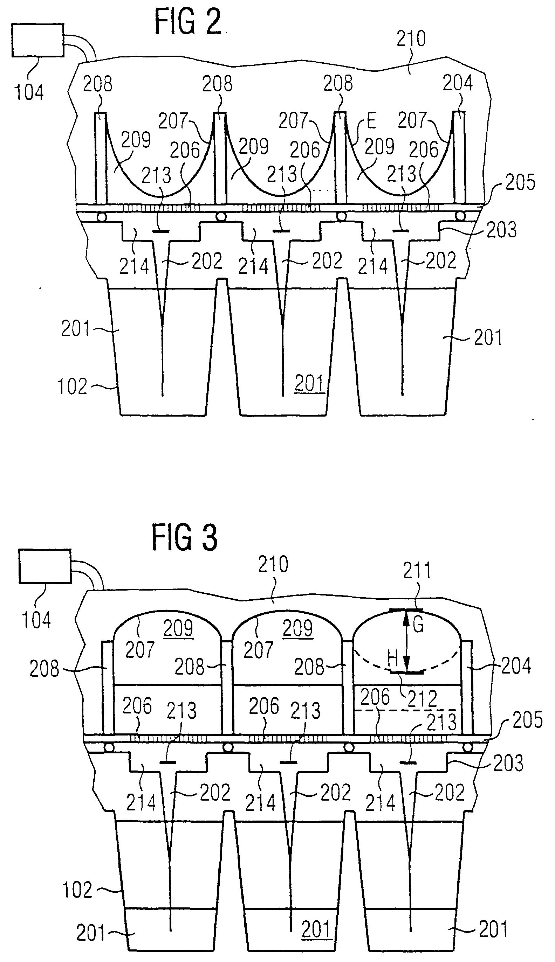

Über der weiteren Platte 103, die entsprechend den Vertiefungen 102 jeweils Pipetten, wie in Fig. 2 dargestellt, aufweist, sind luftdicht mit einer auf der weiteren Platte 103 aufgebrachten Pumpe 104 gekuppelt.

Mittels der Pumpe 104 ist der Druck innerhalb der weiteren Platte 103, wie im weiteren beschrieben, einstellbar, d.h. es ist in dem entsprechenden Raum durch die Pumpe 104 ein Überdruck oder ein Unterdruck frei einstellbar.

**Fig.2** zeigt einen vergrößerten Ausschnitt 105 der Anordnung 100 aus **Fig.1.**

Wie **Fig.2** zu entnehmen ist, ist üblicherweise in die Vertiefungen 102 jeweils ein zu analysierendes Analyt 201 eingebracht.

Die in der weiteren Platte 103 angeordneten Pipetten 202 sind derart in der weiteren Platte 103 angeordnet, dass bei Befestigen der weiteren Platte 103 auf der Mikrotiterplatte 102 mittels der nicht dargestellten Schrauben jeweils eine Pipette 202 in eine hierzu zugeordnete Vertiefung 102 und damit in das jeweilige Analyt 201 hineinragt.

Die Pipetten 202 sind an einem unteren Kunststoffkörper 203 der weiteren Platte 103 ausgebildet.

Der untere Kunststoffkörper 203 ist mit einem oberen Kunststoffkörper 204 gekuppelt, beispielsweise verklebt.

Gemäß diesem Ausführungsbeispiel ist es vorgesehen, dass zwischen dem unteren Kunststoffkörper 203 und dem oberen Kunststoffkörper 204 eine Zwischenplatte 205 angeordnet ist, in der der Analysechips 206, gemäß diesem Ausführungsbeispiel der in [2] beschriebener Analysechip, der auch als Flow-Thru-Chip™ bezeichnet wird, eingebracht ist derart, dass jeweils ein Analysechip 206 jeweils für eine Vertiefung vorgesehen ist.

Anschaulich bedeutet dies, dass jeweils ein Analysechip 206 vorgesehen ist zur Analyse eines Analyts 201, welches jeweils in einer Vertiefung 102 enthalten ist und gemäß einem im weiteren beschriebenen Verfahren über die Pipette 202 und den unteren Kunststoffkörper 203 durch den Analysechip 206, d.h. durch die Flüssigkeitskanäle des Analysechips 206 in den oberen Kunststoffkörper 204 eingesaugt wird.

Auf diese Weise wird das Analyt 201 jeweils mit den Fängermolekülen auf der Oberfläche der Flüssigkeitskanäle des Analysechips 206 in innigen Kontakt gebracht.

An dem oberen Kunststoffkörper 204 ist jeweils für eine Vertiefung 102 eine Membran 207 vorgesehen.

Dies bedeutet, dass der obere Kunststoffkörper 204 jeweils einen im wesentlichen der oberen Flächenform der Vertiefung 102 entsprechenden Raum bildet, der jeweils durch Seitenwände 208 des oberen Kunststoffkörpers 204 gebildet wird.

Anschaulich werden somit in dem oberen Kunststoffkörper 204 Kammern 209 gebildet, die jeweils begrenzt sind durch die Wände 208, die Membran 207 sowie die Zwischenplatte 205 mit dem integrierten Analysechip 206.

Die Membran 207 ist jeweils eine elastische Membran, beispielsweise aus Latex, die mittels einer Druckänderung in einem sich über dem oberen Kunststoffkörper 204 befindenden Raum 210, der mit der Pumpe 104 gekuppelt ist, verändert werden kann.

Der Raum 210 kann mit Gas oder mit einer Flüssigkeit gefüllt sein, wobei die Membran für das entsprechende Gas oder die Flüssigkeit, mit der der Raum 210 gefüllt ist, nicht permeabel ist.

Anschaulich wird somit aufgrund einer Druckveränderung in dem Raum 210 die Membran 207 verformt, so dass eine Druckveränderung in den jeweiligen Kammern 209 erzeugt wird, wodurch das Analyt 201 über die Pipette 202 durch den Analysechip 206 entweder angesaugt oder in die Vertiefung zurückgedrückt wird.

Die Flüssigkeitskanäle in dem Flow-Thru-Chip™ 206 sind mit biologischem Material, d.h. mit DNA-Fängermolekülen gemäß diesem Ausführungsbeispiel belegt, die mittels der bekannten Gold-Schwefel-Kopplung an der Oberfläche der Flüssigkeitskanäle in dem Analysechip 206 gebunden sind.

Weist das zu analysierende Analyt 201 DNA-Stränge mit einer Sequenz auf, die der DNA-Sequenz des DNA-Fängermoleküls komplementär ist, so binden diese DNA-Stränge an die DNA-Fängermoleküle in dem Flüssigkeitskanal des Analysechips 206 kovalent.

Anschaulich wird somit die Membran 207 jeweils durch Druckänderung, wie in **Fig.3** dargestellt, entsprechend der Größe der Membran zwischen den zwei Extrempositionen, in **Fig.3** symbolisiert durch die Tangenten 211, 212 an die jeweils maximal gewölbten Membrane.

Aufgrund der Verformung wird, wie oben beschrieben, das Analyt eingesaugt oder ausgegeben.

Weiterhin ist gemäß diesem Ausführungsbeispiel in dem unteren Kunststoffkörper 203 für jede Pipette 202 jeweils zwischen der Pipette 202 und der Zwischenplatte 205 eine Prellplatte 213 vorgesehen, durch die mittels einem Ausbilden einer entsprechenden Strömungsform um die Prellplatte 213 herum ein verbessertes Mischen des Analyts 201 gewährleistet ist.

Es sollte gemäß dieser Ausführungsform beachtet werden, dass die mittels der Membran 207 umgepumpte Flüssigkeitsmenge des Analyten 201 deutlich größer sein sollte als das durch den unteren Kunststoffkörper 203 für jeweils eine Pipette 202 definierte Volumen einer unteren Kammer 214 unterhalb des Analysechips 206.

Nach erfolgter Analyse der Analyten, die beispielsweise im Rahmen einer Hybridisierung typischerweise einige Stunden andauert, wird die Anordnung 100 mittels Membran-Maximalstellung in der Position 212 entleert.

Spülvorgänge der Anordnung mittels einer Spüllösung können in entsprechender Weise wie das Analysieren erfolgen.

**Zweites Ausführungsbeispiel:**

Das zweite Ausführungsbeispiel entspricht im wesentlichen dem ersten Ausführungsbeispiel mit dem Unterschied, dass keine Membran 207 erforderlich ist.

Um zu gewährleisten, dass, nachdem das gesamte Analyt aus einer jeweiligen Vertiefung angesaugt worden ist, keine Luft oder ein anderes Gas aus der Vertiefung in die Pipette eingesaugt wird, wird die Pumpe 104 derart betrieben, dass eine im weiteren beschriebene Oberflächenspannung, die sich an dem unteren Ende der jeweiligen Pipette 202 in dem Analyten ausbildet, nicht überschritten wird.

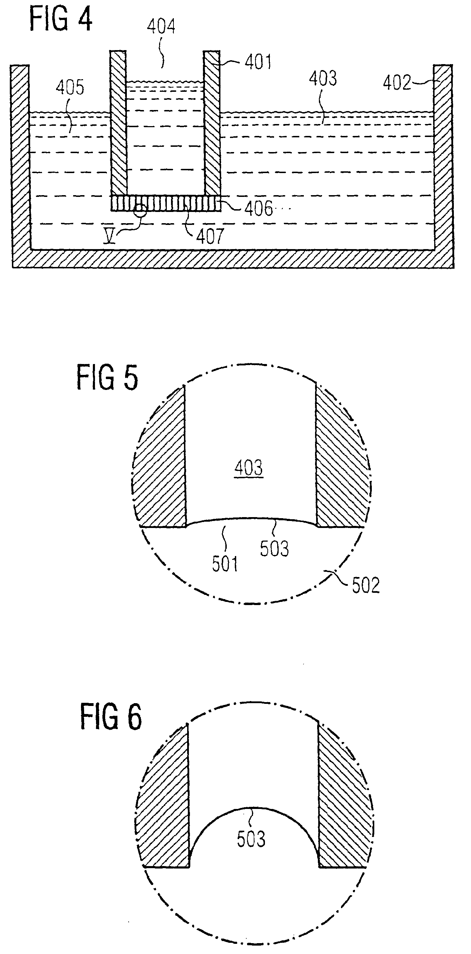

Dieses Prinzip ist in **Fig.4** veranschaulicht.

**Fig.4** zeigt eine Pipette 401, die in eine Vertiefung 402 und dabei in das Analyt 403 eingetaucht ist.

Ein in der Pipette 401 gebildeter Unterdruck ist in **Fig.4** mittels eines Pfeils 404 symbolisiert.

Die Pipette 401 gemäß diesem Ausführungsbeispiel ist als eine Röhre mit einem Durchmesser von ungefähr 1 cm ausgestaltet und an ihrem unteren Ende 405 mit einer Membran 406 abgeschlossen, beispielsweise verklebt, wobei die Membran 406 eine Vielzahl von Poren 407, mindestens jedoch eine Pore 407, mit einem vorzugsweise konstanten Durchmesser, gemäß diesem Ausführungsbeispiel einem Durchmesser von 10 µm, enthält.

Allgemein kann eine solche Pore 407 beispielsweise einen Durchmesser von 0,1 µm bis 100 µm aufweisen.

Gemäß diesem Ausführungsbeispiel wird eine Membran 407, wie sie aus [3] bekannt ist, aus Glas oder Silizium verwendet.

Gemäß diesem Ausführungsbeispiel ist ohne Einschränkung der Allgemeingültigkeit angenommen, dass die Membran 407 hydrophil ausgestaltet ist.

Das Analyt 403 dringt nun in die Poren 407 der Membran 406 ein und kann durch einen geringen Unterdruck, gemäß diesem Ausführungsbeispiel von beispielsweise 0,03 bar in die Pipette 401 gesaugt werden.

Ist die Vertiefung 402 geleert, d.h. ist das Analyt 403 vollständig in der Pipette 401 aufgenommen, so bildet sich, wie in **Fig.5** dargestellt, an jeder Porenöffnung 501 zwischen dem Analyten 403 und der sich lediglich mehr in der Vertiefung 402 befindlichen Luft 502 ein Meniskus 503.

Um den sich bildenden Meniskus 503 derart zu verformen, dass ein Eintritt von Luft 502 in die Pore 407 möglich wird, muss ein wesentlich stärkerer Unterdruck erzeugt werden als der Unterdruck, der erforderlich ist, um das Analyt 403, allgemein eine Flüssigkeit, in die Kapillare, d.h. in die Pipette 401, einzusaugen.

Dieser erforderliche Druck P lässt sich gemäß folgender Vorschrift abschätzen:

$$P = 2 \cdot \frac{S}{r},$$

wobei

- mit S die Oberflächenspannung der jeweiligen Flüssigkeit, d.h. des Analyten 403, und
- mit r der Radius der jeweiligen Pore 407, bezeichnet wird.

Diese Größen sind für eine vorgegebene Anordnung üblicherweise bekannt.

Wird als Analyt Wasser verwendet und weist eine Pore 407 einen Radius von 10 μm auf, so ergibt sich für den erforderlichen Druck P ein Wert von 0,29 bar.

Damit ein Lufteintritt in die Pore 407 verhindert werden kann, ist es erforderlich, einen Druck durch die Pumpe zu gewährleisten, der unterhalb dieses abgeschätzten Drucks liegt.

Diese Steuerung ist üblicherweise unkritisch, da, wie oben dargelegt, ein Unterdruck von 0,03 bar erforderlich ist, um das Analyt einzusaugen, wobei dieser Druck um eine Zehnerpotenz geringer ist als der kritische Druck, bei dem die Oberflächenspannung überwunden wäre und es zu einem Eintritt von Luft in die Pore 407 kommen könnte.

Dies bedeutet anders ausgedrückt, das der in der Pipette erzeugte Unterdruck P für diese Pipette mit den oben genannten Abmessungen in einem Bereich von 0,03 < P < 0,29 bar liegt.

Somit wird auf sehr einfache Weise ein Lufteintritt in die Pipette verhindert werden.

Es ist selbstverständlich ebenso möglich, bei einer hydrophoben Membran 407, in analoger Weise ein vorgebbares Gas mittels der oben beschriebenen Anordnung zu pumpen und einen Flüssigkeitseintritt durch die jeweilige Pore, allgemein durch eine Kapillare, zu verhindern.

Anschaulich ist durch dieses Ausführungsbeispiel eine Erkennung automatisiert möglich, ob schon das gesamte Analyt 403 aus der jeweiligen Vertiefung aufgenommen worden ist.

Es ist ferner automatisiert gewährleistet, dass kein anderes Medium in die Analysevorrichtung aufgenommen wird als das zu analysierende Material.

**Fig.6** zeigt den vergrößerten Ausschnitt eines unteren Endes einer Pore 407 aus **Fig.4** bei einem Unterdruck, der in einem Bereich liegt, der kurz davor ist, dass Luft 502 in die Pore 407 eintritt.

Dies wird deutlich aufgrund des stark gewölbten Meniskus 503.

In diesem Dokument sind folgende Veröffentlichungen zitiert:

[1] M. Winter, Robotik und Automationskonzepte in der kombinatorischen Chemie - Synthese- und Pipettierroboter, Transkript Laborwelt, Nr. 1, S. 25 - 29, 2000;

[2] A. Steel et al., The Flow-Thru Chip: A Three Dimensional Biochip Plattform, Microarray Biochip Technology, edited by M. Schena, S. 87 - 117, 2000;

[3] EP0 296 348 B1

**Bezugszeichenliste**

| | |
|---|---|
| 100 | Anordnung |
| 101 | Mikrotiterplatte |
| 102 | Vertiefung |
| 103 | weitere Platte |
| 104 | Pumpe |
| 105 | Ausschnitt |
| 201 | Analyt |
| 202 | Pipette |
| 203 | Unterer Kunststoffkörper |
| 204 | Oberer Kunststoffkörper |
| 205 | Zwischenplatte |
| 206 | Analysechip |
| 207 | Membran |
| 208 | Wände |
| 209 | Obere Kammer |
| 210 | Raum |
| 211 | Erste Membranposition |
| 212 | Zweite Membranposition |
| 213 | Prellplatte |
| 214 | Untere Kammer |
| 401 | Pipette |
| 402 | Vertiefung |
| 403 | Analyt |
| 404 | Pfeil |
| 405 | Unterer Bereich Pipette |
| 406 | Membran |
| 407 | Pore |

501   Porenöffnung
502   Luft
503   Meniskus

**Patentansprüche**

1. Anordnung zur Aufnahme flüssiger Analyten mit

- einer Mikrotiterplatte mit einer Vielzahl von Vertiefungen zur Aufnahme eines Analyten,
- einer Vielzahl von Pipetten, mit denen ein Analyt aus einer zugehörigen Vertiefung entnommen werden kann,
- mindestens einer Pumpe, die mit mehreren Pipetten gekuppelt ist derart, dass jeweils ein Analyt mittels der Pumpe über eine zugehörige Pipette angesaugt werden kann, und dass durch Betätigen der Pumpe Analyte gleichzeitig aus mehreren Vertiefungen angesaugt oder in mehrere Vertiefungen eingebracht werden können,
- mit Analysechips zur Analyse des Analyt, wobei jeweils ein Analysechip einer Vertiefung zugeordnet ist zur Analyse eines in der jeweiligen Vertiefung eingebrachten Analyt, und
- bei der die mit dem Analyt in Kontakt kommende Fläche zumindest eines Teils der Analysechips derart eingerichtet ist, dass biologisches Material zum Binden von in dem Analyten enthaltenen Molekülen auf der Fläche immobilisiert werden kann.

2. Anordnung nach Anspruch 1, bei der die Pipetten als Pipettierkamm ausgestaltet sind.

3. Anordnung nach Anspruch 2, bei der der Pipettierkamm ein erstes Element und ein mit dem ersten Element gekuppeltes zweites Element aufweist, wobei das zweite Element die Pipetten aufweist.

4. Anordnung nach einem der Ansprüche 1 bis 3, bei der zwischen dem ersten Element und dem zweiten Element eine Platte angeordnet ist.

5. Anordnung nach einem der Ansprüche 1 bis 4, bei der die Analysechips in der Platte angeordnet sind.

6. Anordnung nach einem der Ansprüche 1 bis 5, bei der die mit dem Analyt in Kontakt kommende Fläche zumindest eines Teils der Analysechips biologisches Material aufweist zum Binden von in dem Analyten enthaltenen Molekülen.

7. Anordnung nach einem der Ansprüche 1 bis 6, bei der die Mikrotiterplatte 96 Vertiefungen oder 384 Vertiefungen zur Aufnahme eines Analyten aufweist.

8. Anordnung nach einem der Ansprüche 1 bis 6, bei der über mindestens einem Teil der Pipetten jeweils eine elastische Membran angeordnet ist, so dass durch Verformung der Membran Analyt aus der entsprechenden Vertiefung angesaugt oder in die entsprechende Vertiefung eingebracht werden kann.

9. Anordnung nach einem der Ansprüche 1 bis 8, bei der für jede Pipette eine Prellplatte vorgesehen ist zum Mischen des durch die Pipette geführten Analyts.

10. Anordnung nach einem der Ansprüche 1 bis 9, bei der die Pumpe derart betreibbar ist, dass Analyt unter einem Druck angesaugt wird, der geringer ist als eine in der Pipette möglicherweise gebildete Oberflächenspannung des Analyts.

FIG 1

EP 1 160 573 A2

FIG 2

FIG 3

FIG 4

404

401

405

403

402

406

407

∇

FIG 5

403

501

503

502

FIG 6

503